# EUROPEAN PATENT SPECIFICATION

(11) **EP 4 316 993 B1**
(45) Date of publication and mention of the grant of the patent: **29.04.2026**
(21) Application number: 21933495.0
(22) Date of filing: 30.03.2021
(51) Int. Cl.: B64F 1/305

(54) **PASSENGER BOARDING BRIDGE**
FLUGGASTBRÜCKE
PASSERELLE D'EMBARQUEMENT DE PASSAGERS

(43) Date of publication of application: 07.02.2024
(73) Proprietor: ShinMaywa Industries, Ltd., Takarazuka-shi, Hyogo 665-8550 (JP)
(72) Inventor: AKEGAMI, Takeshi, Hyogo 665-8550 (JP); DOBASHI, Hideaki, Hyogo 665-8550 (JP)
(74) Representative: Dehns
(86) International application number: PCT/JP2021/013522
(87) International publication number: WO 2022/208655

(56) References cited:
- WO-A1-2019/012648
- WO-A1-2020/030735
- WO-A1-2020/109449
- CN-A- 112 265 647
- JP-A- 2019 526 477
- JP-B2- 6 018 713
- US-A1- 2018 074 473

## Description

### Technical Field

The present invention relates to a passenger boarding bridge.

### Background Art

Conventionally, a passenger boarding bridge is known as equipment that forms a passenger walkway between an aircraft and a terminal building of an airport.

Patent Literature 1 discloses an entrance position indicating device of a boarding bridge. The entrance position indicating device includes: a lighting module including a plurality of lighting members that are coupled in at least one line along a connecting part of a cab where the cab is to be connected to an aircraft; and a control module that controls colors or blinking of lighting members corresponding to the position of the entrance of the aircraft. This makes it possible to indicate, by using lighting, the position of the entrance of the aircraft for the boarding bridge. Accordingly, an operator can visually recognize the connecting position.

Patent Literature 2 discloses a technique in which a relative position between a cab and an entrance of an aircraft is measured in a non-contacting manner by a two-dimensional laser displacement sensor provided in the cab. Patent Literature 2 describes that, based on relative position data obtained from the two-dimensional laser displacement sensor, a controller calculates various control variables for moving the cab from a parking position (a standby position) to cause the cab to get docked with the entrance of the aircraft, and controls various drive units to perform automatic docking of the cab with the entrance of the aircraft. Patent Literature 2 further describes that, after the automatic docking is completed, based on position data of the lower edge of the entrance of the aircraft, the position data being obtained from the two-dimensional laser displacement sensor, the controller moves the cab to follow upward/downward movements of the aircraft.

### Citation List

### Patent Literature

PTL 1: Japanese National Phase PCT Laid-Open Application Publication No. 2019-531977
PTL 2: WO 2018/096773
JP 6 018713 B2 discloses a passenger boarding bridge where control of movable floor movement of a cab can be appropriately performed at the time of opening and closing of a door of an aircraft platform.
WO 2020/109449 A1 discloses a method for automated handling a passenger boarding bridge.
CN 112 265 647 A discloses a remote automatic control method of a boarding bridge.
US 2018/074473 A1 discloses an automated loading bridge positioning method using one or more encoded decals positioned on a surface.

### Summary of Invention

### Technical Problem

In the case of Patent Literature 1, the operator can visually perform the docking of the cab with the aircraft entrance, relying on the indication by the lighting. In this case, however, the cab docking precision significantly depends on the skill of the operator. Particularly in the case of docking the cab with a large aircraft having a large entrance door, there is not much gap between the movement trajectory of the door and the internal space of the cab. Therefore, in this case, high docking precision is strictly required. For this reason, in this case, if a non-proficient operator performs the docking, there is a risk that the door may interfere with part of the cab before the door is fully opened.

In the case of Patent Literature 2, after the cab is automatically docked with the entrance of the aircraft, the cab is moved to follow upward/downward movements of the aircraft. However, Patent Literature 2 does not take into consideration whether or not the automatically docked state satisfies a strictly required high docking precision, particularly in the case of docking the cab with the entrance of a large aircraft having a large door. In the case of docking the cab with an entrance having a large door, final checking of the docking position is crucial in order to prevent the interference between the door and the cab.

The present invention has been made to solve the above-described problems. An object of the present invention is to provide a passenger boarding bridge that makes it possible to prevent interference between the door of a large aircraft and the cab from occurring before the door is fully opened.

### Solution to Problem

In order to achieve the above object, a passenger boarding bridge according to one aspect of the present invention includes: a horizontally rotatable rotunda connectable to a terminal building; a tunnel unit whose proximal end is connected to the rotunda in such a manner that the tunnel unit is liftable and lowerable, the tunnel unit being configured to be extendable and retractable in a longitudinal direction of the tunnel unit; a cab rotatably provided at a distal end of the tunnel unit; a mover that moves the cab to dock the cab with an entrance of an aircraft; a door position detector that is provided inside the cab and that detects, after the cab is docked with the entrance by the mover, a position of an edge portion of a door of the entrance in a width direction of the door with respect to the cab in a case where a width of the door is greater than or equal to a predetermined width; a door opening determiner that determines whether or not the door of the entrance can be opened smoothly based on whether or not the position of the edge portion of the door in the width direction of the door, the position being detected by the door position detector, is present within a predetermined allowable region; and a notifier that notifies that there is an abnormality in a case where the door opening determiner has determined that the door of the entrance cannot be opened smoothly.

According to the above configuration, in a case where the aircraft is a large aircraft whose door width is greater than or equal to the predetermined width, after the cab is docked with the entrance and before the door is opened, the door opening determiner determines whether or not the door can be opened smoothly based on whether or not the position of the edge portion of the door in the width direction of the door, the position being detected by the door position detector, is present within the predetermined allowable region. If it is determined that the door cannot be opened smoothly, the notifier notifies that there is an abnormality. Accordingly, an operator performs the docking of the cab with the entrance again. This makes it possible to prevent interference between the door of the large aircraft and the cab from occurring when the door is opened.

The mover may be configured to perform, by automatic control, an operation of: moving the cab from a predetermined standby position, from which the cab is to start moving, to a temporary stop position, at which the cab is located forward away from the entrance by a predetermined distance; and then moving the cab to a position at which the cab gets docked with the entrance. The passenger boarding bridge may further include: a camera that is mounted to the cab and that captures an image of the entrance of the aircraft; a pre-docking door width calculator that detects, when the cab is at the temporary stop position, a first characteristic portion and a second characteristic portion based on the image of the entrance captured by the camera, the first and second characteristic portions being present around the door of the entrance and being away from each other in the width direction of the door, and calculates the width of the door based on positions of the respective first and second characteristic portions on the image; and a door width determiner that determines whether or not the width of the door calculated by the pre-docking door width calculator is greater than or equal to the predetermined width. The door position detector may be configured to detect the position of the edge portion of the door in the width direction of the door with respect to the cab in a case where the door width determiner has determined that the width of the door calculated by the pre-docking door width calculator is greater than or equal to the predetermined width.

The passenger boarding bridge may further include a pre-moving door width calculator that detects, when the cab is at the standby position, the first and second characteristic portions based on the image of the entrance captured by the camera, and calculates the width of the door based on the positions of the respective first and second characteristic portions on the image. The passenger boarding bridge may be configured to terminate the automatic control of the operation of the mover in a case where a discrepancy between the width of the door calculated by the pre-moving door width calculator and the width of the door calculated by the pre-docking door width calculator is out of a predetermined allowable range.

The first and second characteristic portions may be in a predetermined positional relationship in which their positions are different from each other in both a left-right direction and a vertical direction of the door. The passenger boarding bridge may further include an image determiner that determines whether or not a positional relationship between the first and second characteristic portions on the image is the predetermined positional relationship. The passenger boarding bridge may be configured to terminate the automatic control of the operation of the mover in a case where the image determiner has determined that the positional relationship between the first and second characteristic portions is not the predetermined positional relationship.

The passenger boarding bridge may further include: a bellows-shaped closure that is provided at a distal end of the cab and that is extendable and contractible in a front-back direction; and a level detector that is mounted to the cab and that comes into contact with the aircraft and detects an upward/downward movement of the aircraft with respect to the cab. The passenger boarding bridge may be configured to: perform automatic control of operations of the closure and the level detector, following the automatic control of the operation of the mover; and terminate the automatic control of the operations of the closure and the level detector in a case where the door opening determiner has determined that the door of the entrance cannot be opened smoothly.

The mover may be configured to perform, by manual control, an operation of moving the cab from a predetermined standby position, from which the cab is to start moving, to a position at which the cab gets docked with the entrance. The passenger boarding bridge may further include: a bellows-shaped closure that is provided at a distal end of the cab and that is extendable and contractible in a front-back direction; a level detector that is mounted to the cab and that comes into contact with the aircraft and detects an upward/downward movement of the aircraft with respect to the cab; and a door width identifier that receives an input of aircraft type information about the aircraft, with which the cab is to be docked, and based on the inputted aircraft type information, identifies whether or not the width of the door of the aircraft is greater than or equal to the predetermined width. In a case where the door width identifier has identified that the width of the door of the aircraft is greater than or equal to the predetermined width, the door position detector may be configured to detect, after the cab is docked with the entrance, the position of the edge portion of the door in the width direction of the door with respect to the cab based on at least one of a manually controlled operation of causing the closure to extend and a manually controlled operation of causing the level detector to start operating.

The door position detector may be a laser displacement sensor that detects a groove between a fuselage and the edge portion of the door in the width direction of the door.

### Advantageous Effects of Invention

The present invention is configured as described above, and has an advantage of being able to provide a passenger boarding bridge that makes it possible to prevent interference between the door of a large aircraft and the cab from occurring before the door is fully opened.

The above object, other objects, features, and advantages of the present invention will be made clear by the following detailed description of preferred embodiments with reference to the accompanying drawings.

### Brief Description of Drawings

FIG. 1 is a schematic plan view showing one example of a passenger boarding bridge according to an embodiment of the present invention.
FIG. 2 is a schematic side view of the passenger boarding bridge.
FIG. 3 is a side view showing one example of a state where a cab is docked with an aircraft.
FIG. 4 is a front view of a cab distal end part to be docked with the aircraft (the front view is taken from the aircraft side).
FIG. 5 is a plan view showing one example of arrangement of a laser displacement sensor installed in the cab.
FIG. 6 shows one example of a control panel, etc.
FIG. 7 is a flowchart schematically showing one example of operations performed at the time of docking of the passenger boarding bridge.
FIG. 8 is a flowchart showing one example of various determination processes performed during automatic control of the passenger boarding bridge.
FIG. 9 is a schematic diagram showing one example of an image captured by a camera when the cab is at a standby position.
FIG. 10 shows a detection region of the laser displacement sensor.

### Description of Embodiments

Hereinafter, preferred embodiments of the present invention are described with reference to the drawings. In the drawings, the same or corresponding elements are denoted by the same reference signs, and repeating the same descriptions is avoided below. The drawings show each component schematically in order to facilitate the understanding thereof. Therefore, in some cases, the drawings may not display accurate shapes, accurate dimensional ratios, etc. The present invention is not limited to the embodiments described below.

### (Embodiment)

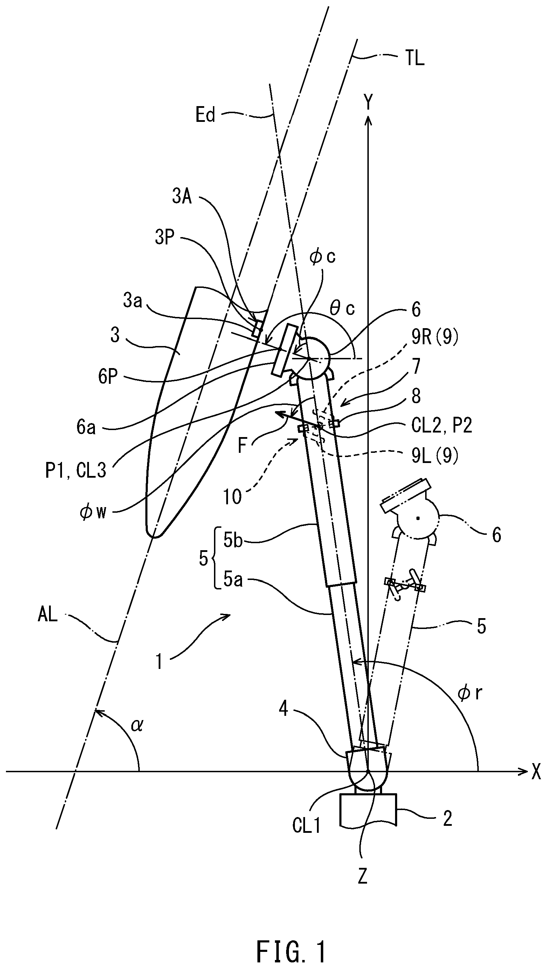

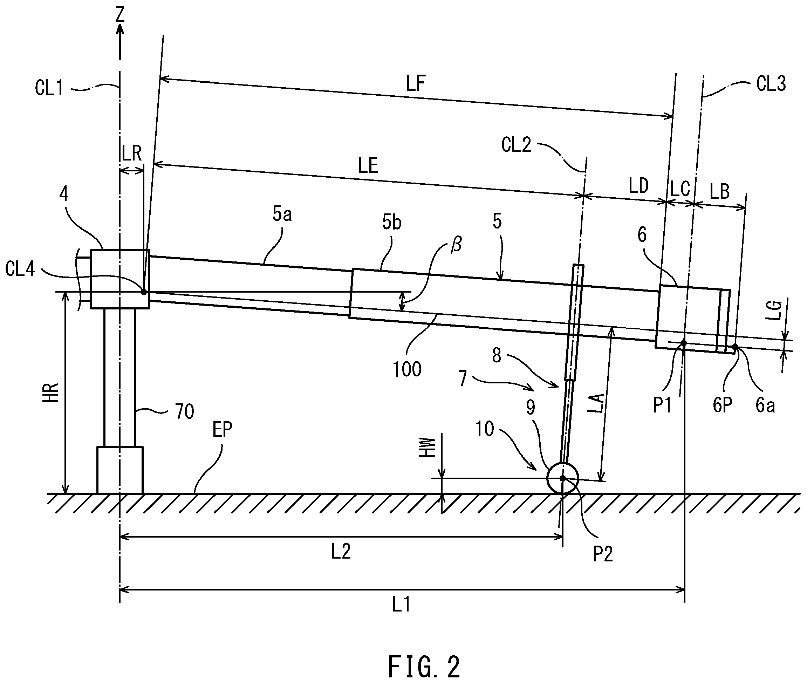

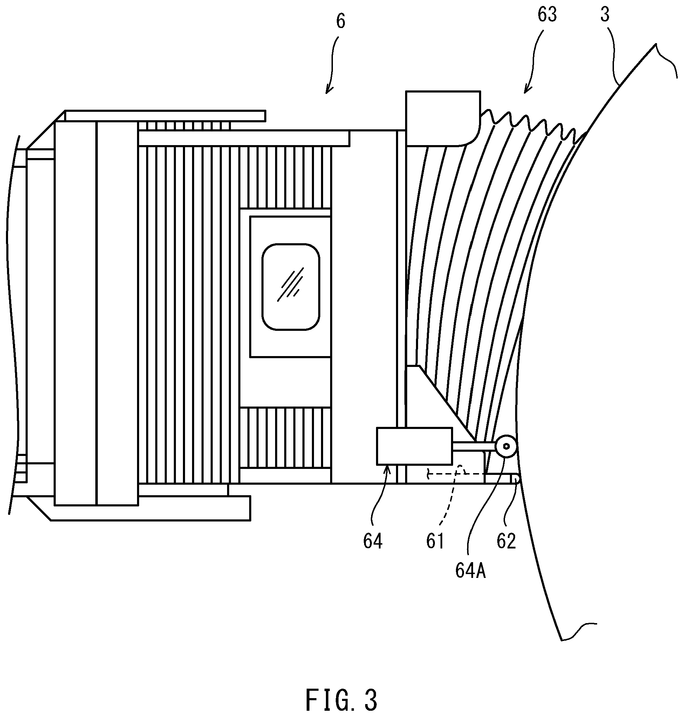

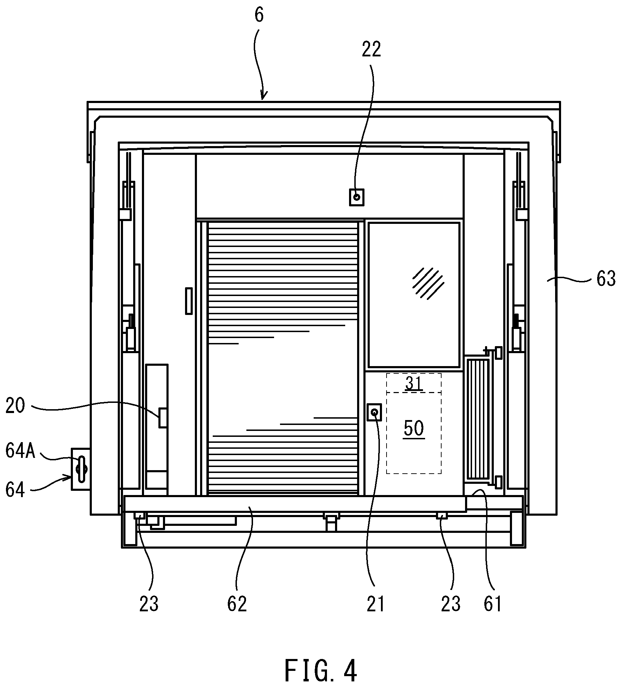

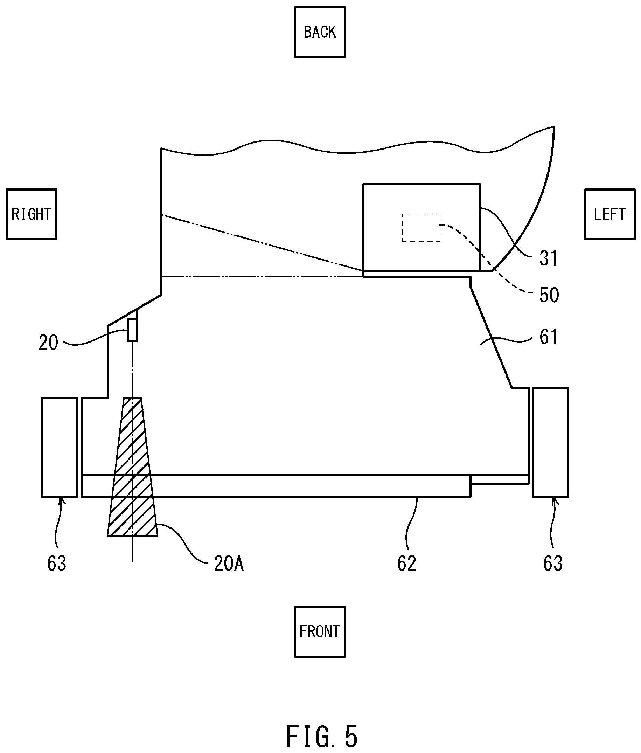

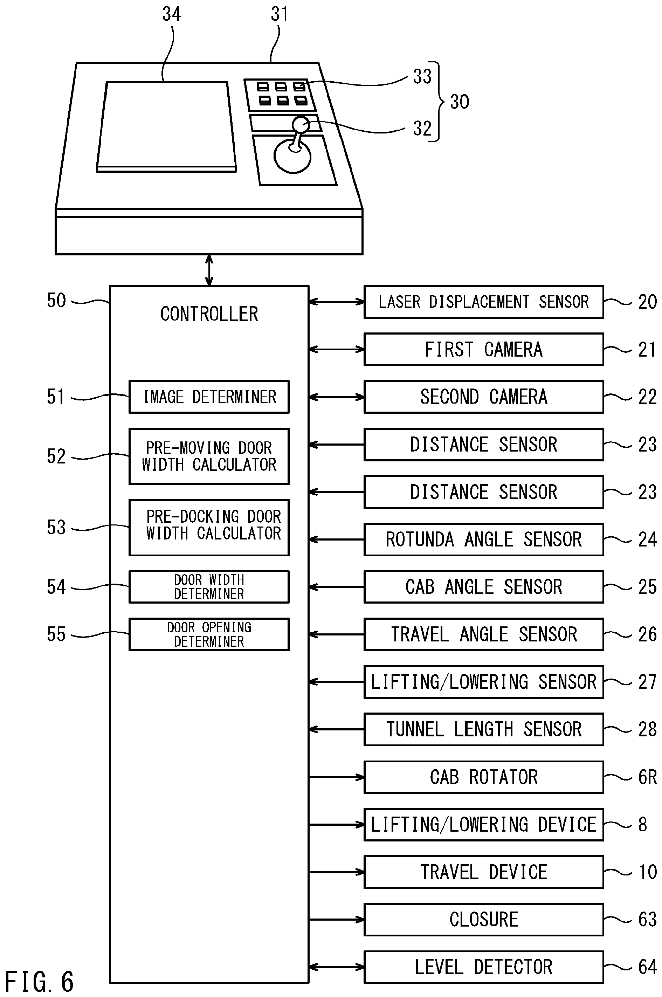

FIG. 1 is a schematic plan view showing one example of a passenger boarding bridge according to an embodiment of the present invention. FIG. 2 is a schematic side view of the passenger boarding bridge. FIG. 3 is a side view showing one example of a state where a cab is docked with an aircraft. FIG. 4 is a front view of a cab distal end part to be docked with the aircraft (the front view is taken from the aircraft side). FIG. 5 is a plan view showing one example of arrangement of a laser displacement sensor installed in the cab. FIG. 6 shows one example of a control panel, etc.

The passenger boarding bridge 1 includes: a horizontally rotatable rotunda (proximal-end round room) 4 connected to an entrance of a terminal building 2 of an airport; a tunnel unit 5, whose proximal end is connected to the rotunda 4 in such a manner that the tunnel unit 5 is liftable and lowerable, the tunnel unit 5 being configured to be extendable and retractable in the longitudinal direction of the tunnel unit 5; a cab (distal-end round room) 6 provided at the distal end of the tunnel unit 5 in such a manner that the cab 6 is rotatable in regular and reverse directions; and drive columns 7.

The rotunda 4 is supported by a support pillar 70, such that the rotunda 4 is rotatable in regular and reverse directions about a rotational axis (vertical axis) CL1.

The tunnel unit 5 forms a passenger walkway, and includes a plurality of tubular tunnels 5a and 5b, which are fitted together in a nested manner, such that the tunnel unit 5 is extendable and retractable in the longitudinal direction thereof. In the description herein, the tunnel unit 5 is formed by the two tunnels 5a and 5b as one example. The tunnel unit 5 is formed by at least two tunnels. The proximal end part of the tunnel unit 5 is connected to the rotunda 4 in such a manner that the proximal end part is swingable (vertically) about a horizontal rotational axis CL4 (FIG. 2). That is, the proximal end part of the tunnel unit 5 is connected to the rotunda 4 in such a manner that the tunnel unit 5 is liftable and lowerable.

The drive columns 7, which serve as support legs, are mounted to the distal side of the tunnel unit 5 (specifically, the tunnel 5b, which is the frontmost tunnel). It should be noted that the drive columns 7 may be mounted to the cab 6.

The drive columns 7 are provided with a lifting/lowering device 8, which moves the cab 6 and the tunnel unit 5 upward and downward (i.e., lifts and lowers the cab 6 and the tunnel unit 5). The lifting/lowering device 8 includes, for example, a pair of extendable and retractable support pillar portions, each of which is formed by two pillars fitted in a nested manner. The tunnel unit 5 is supported by the pair of support pillar portions of the lifting/lowering device 8. By extending or retracting the pair of support pillar portions, the lifting/lowering device 8 can lift or lower the tunnel unit 5 (i.e., move the tunnel unit 5 upward or downward). Accordingly, the cab 6 and the tunnel unit 5 can be swung vertically with respect to the rotunda 4.

The drive columns 7 are further provided with a travel device 10 including a pair of travel wheels 9 (a right travel wheel 9R and a left travel wheel 9L), which are drivable to rotate independently of each other in regular and reverse directions. The travel device 10 is provided under the lifting/lowering device 8. The travel device 10 is configured to travel forward (travel in an arrow F direction) by regular rotation of the two travel wheels 9, and to travel backward (travel in a direction opposite to the arrow F direction) by reveres rotation of the two travel wheels 9. The travel device 10 is also configured to be rotatable in regular and reverse directions about a rotational axis CL2, such that the rudder angle is changeable within the range of -90 degrees to +90 degrees with respect to the extension/retraction direction (longitudinal direction) of the tunnel unit 5, and thus the travel direction of the travel device 10 is changeable. For example, by causing the two travel wheels 9 to rotate in opposite directions to each other, the travel direction (the facing direction of the travel wheels 9) can be changed on the spot. By causing the travel device 10 (the travel wheels 9) to travel on the apron, the tunnel unit 5 can be rotated about the rotunda 4 and can be extended/retracted.

The cab 6 is provided at the distal end of the tunnel unit 5. The cab 6 is configured to be rotatable, by a cab rotator 6R (FIG. 6), in regular and reverse directions about a rotational axis CL3, which is perpendicular to the floor surface of the cab 6.

In the present embodiment, the travel device 10, the lifting/lowering device 8, and the cab rotator 6R serve as a mover to move the cab 6.

As shown in FIG. 3 and FIG. 4, a bumper 62 is provided at the distal end of a floor 61 of the cab 6 to be docked with an aircraft 3. A plurality of (in this example, two) distance sensors 23 (e.g., laser distance meters), which serve as a measurer to measure the distance between the cab 6 and the aircraft 3, are mounted to the bumper 62, such that the distance sensors 23 are arranged in the left-right direction of the bumper 62. It should be noted that the installation positions of the distance sensors 23 are changeable as necessary. For example, the distance sensors 23 may be arranged on the floor 61 of the cab 6.

Further, as shown in FIG. 4, first and second cameras 21 and 22 each for capturing an image of an entrance 3A (a door 3a) of the aircraft 3 are installed at respective positions that are recessed from the distal end part of the cab 6. Each of the first and second cameras 21 and 22 is preferably a camera whose image-capturing direction is adjustable (changeable) in relation to the cab 6 and whose angle of view may be adjustable. In this example, the second camera 22 is disposed above the first camera 21. The installation positions of these first and second cameras 21 and 22 may be changed as necessary, so long as the first and second cameras 21 and 22 are disposed away from each other and can each capture an image of the door 3a of the aircraft 3.

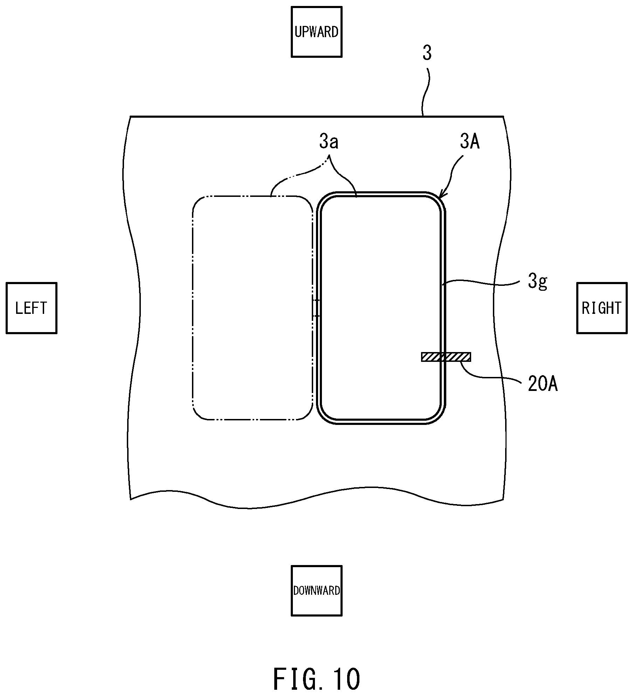

As shown in FIG. 4 and FIG. 5, inside the cab 6, a laser displacement sensor 20 serving as a door position detector is installed on the right side of, and slightly above, the floor 61 of the cab 6. In this example, a two-dimensional laser displacement sensor is used as the laser displacement sensor 20. A detection region 20A of the laser displacement sensor 20 is indicated by hatching (see also FIG. 10). In a case where the aircraft 3 is a large aircraft, after the cab 6 is docked with the entrance 3A of the aircraft 3, the laser displacement sensor 20 performs laser irradiation to detect a groove 3g (see FIG. 10) between the fuselage and the right-side edge portion (longer side portion) of the door 3a.

A closure 63 is provided at the distal end part of the cab 6. The closure 63 includes a bellows portion that is expandable and contractible in the front-back direction. By docking the cab 6 with the aircraft 3 and expanding the bellows portion forward, the front end of the bellows portion can be brought into contact with the aircraft 3 around the entrance 3A (the door 3a) thereof.

A level detector 64 is mounted on, for example, an outer side wall of the cab 6. The level detector 64 is a device configured to detect the amount of relative upward/downward movement of the aircraft 3 with respect to the cab 6 when the aircraft 3 moves upward/downward due to, for example boarding/disembarking of passengers or loading/unloading of cargo after the cab 6 is docked with the aircraft 3.

The level detector 64 includes, for example, a wheel 64A movable forward and a contact limit switch (not shown) intended for stopping the wheel 64 at an optimal position when the wheel 64A moves forward. The contact limit switch is pre-adjusted such that the pressure of the wheel 64A applied to the surface of the fuselage of the aircraft 3 is optimal. In a case where the wheel 64A moves forward, the forward movement of the wheel 64A can be stopped at a desired moving amount as a result of the contact limit switch being turned ON. This allows the level detector 64 to press the wheel 64A against the surface of the fuselage of the aircraft 3 with an optimal pressure.

When the level detector 64 is actuated, the wheel 64A moves forward. Then, as a result of the contact limit switch being turned ON, the forward movement of the wheel 64A is stopped, such that the wheel 64A contacts the surface of the fuselage of the aircraft 3 with an optimal pressure. Then, when the aircraft 3 moves upward or downward, the wheel 64A rotates. Based on the direction and angle of the rotation of the wheel 64A, the level detector 64 detects the amount of upward/downward movement of the aircraft 3, and if the detected amount of the upward/downward movement of the aircraft 3 is greater than or equal to a predetermined amount, outputs the detected amount of the upward/downward movement to a controller 50. Based on the detected amount of the upward/downward movement, the controller 50 controls the lifting/lowering device 8 of the drive columns 7, such that the cab 6 moves to follow the upward/downward movement of the aircraft 3.

As shown in FIG. 6, the passenger boarding bridge 1 further includes: a rotunda angle sensor 24, which detects a rotational angle Φr (FIG. 1) of the rotunda 4; a cab angle sensor 25, which detects a rotational angle Φc (FIG. 1) of the cab 6 with respect to the tunnel unit 5; a travel angle sensor 26, which detects a rotational angle Φw (FIG. 1) (an angle indicating a travel direction) of the travel device 10 with respect to the tunnel unit 5; a lifting/lowering sensor 27, which detects an amount of lifting/lowering by the lifting/lowering device 8; and a tunnel length sensor 28, which detects the length of the tunnel unit 5 and which is configured as, for example, a distance meter. These sensors are arranged at suitable positions, respectively. The rotational angle Φr of the rotunda 4 is, in a plan view, an angle that is formed by a center line Ed of the tunnel unit 5, the angle being calculated counterclockwise with respect to the X-axis. The rotational angle Φc of the cab 6 is a rotational angle of the cab 6 with respect to the center line Ed of the tunnel unit 5. The rotational angle Φw of the travel device 10 is, in a plan view, a rotational angle of the travel device 10 with respect to the center line Ed of the tunnel unit 5.

It should be noted that FIG. 1 shows the tunnel unit 5 being in a horizontal state (i.e., a state in which an inclination angle β shown in FIG. 2 is 0) and the cab 6 being in a state in which the distal end part of the cab 6 faces the aircraft 3. On the other hand, FIG. 2 shows the tunnel unit 5 being inclined at the inclination angle β and the cab 6 being in a state in which the distal end part of the cab 6 faces in the same direction as the extending direction of the tunnel unit 5 (i.e., the rotational angle Φc of the cab 6 is 0). As shown in FIG. 2, the lifting/lowering device 8 is mounted to the tunnel unit 5 of the passenger boarding bridge 1, such that the extending/retracting direction of the tunnel unit 5 and the extending/retracting direction (lifting/lowering direction) of the lifting/lowering device 8 are orthogonal to each other.

A control panel 31 as shown in FIG. 6 is provided inside the cab 6. The control panel 31 includes various operation switches 33 for performing operations, such as lifting/lowering the tunnel unit 5 and the cab 6 by the lifting/lowering device 8 and rotating the cab 6. The control panel 31 further includes: an operating lever 32 for operating the travel device 10; and a display device 34. The operating lever 32 is configured as a lever-shaped input device (i.e., a joystick) that has degrees of freedom multi-directionally. The operating lever 32 and the various operation switches 33 collectively serve as an operating device 30. It should be noted that the configuration of the operating device 30 is modifiable as necessary.

The controller 50 and the control panel 31 are connected to each other via electrical circuitry. The controller 50 is configured to: receive inputs of information that is based on operations performed with the operating device 30, such as operation commands; receive inputs of, for example, output signals from the sensors 23 to 28; control the operations of the passenger boarding bridge 1; and output, for example, information to be displayed on the display device 34.

It should be noted that the controller 50 includes an arithmetic processing unit such as a CPU and a storage unit including a ROM, RAM, etc. A control program for operating the passenger boarding bridge 1 and information necessary for the operations of the passenger boarding bridge 1 are prestored in the storage unit. By executing the control program by the arithmetic processing unit, the controller 50, for example, controls the operations of the components of the passenger boarding bridge 1 (the operations of, for example, the travel device 10, the lifting/lowering device 8, and the cab rotator 6R), and also functions as, for example, an image determiner 51, a pre-moving door width calculator 52, a pre-docking door width calculator 53, a door width determiner 54, and a door opening determiner 55. It should be noted that information to be stored while the passenger boarding bridge 1 is in operation is also stored in the storage unit. The controller 50 may be configured as a single control device performing centralized control, or may be configured as a plurality of control devices performing distributed control in cooperation with each other via the Internet and LAN. For example, the cab 6 or the frontmost tunnel 5b is provided with the controller 50.

The controller 50 uses an XYZ orthogonal coordinate system as shown in FIG. 1 to recognize in real time the position (coordinates) of each part of the passenger boarding bridge 1. Specifically, as absolute coordinates, the intersection point of the rotational axis CL1 of the rotunda 4 and the plane of an apron EP (FIG. 2) is set as an origin (0, 0, 0), and an X-axis, a Y-axis, and a Z-axis (an axis extending vertically) are set with respect to the origin. Each part of the passenger boarding bridge 1 is expressed by position coordinates in the coordinate system. Of the position coordinates, an X coordinate value, a Y coordinate value, and a Z coordinate value each indicate a distance (e.g., in units of [mm]) from the origin (0, 0, 0), which is the position of the rotational axis CL1 of the rotunda 4. In this example, in FIG. 1, X coordinate values on the right side of the origin (0, 0, 0) are positive X coordinate values, and X coordinate values on the left side of the origin (0, 0, 0) are negative X coordinate values. Y coordinate values on the opposite side of the origin (0, 0, 0) from the terminal building 2 are positive Y coordinate values. Z coordinate values upward of the origin (0, 0, 0) are positive Z coordinate values. The controller 50 expresses the position of each part of the aircraft 3 and of the passenger boarding bridge 1 as position coordinates by using the above-described three-dimensional orthogonal coordinate system (XYZ orthogonal coordinate system).

In FIG. 2, a straight line 100 is a straight line that is drawn in the extending/retracting direction of the tunnel unit 5 from a connection point (CL4) where the rotunda 4 and the tunnel unit 5 are connected, and a distance from a center point P2 of the travel device 10 (i.e., the center point of the two travel wheels 9) to the straight line 100 can be detected by the lifting/lowering sensor 27 as a length LA of the extendable and retractable lifting/lowering device 8.

The controller 50 prestores, in the storage unit, the following values: a distance LB (predetermined value) from a center point P1 of the cab 6 to a reference point 6P on a distal end part 6a of the cab 6; a distance LC (predetermined value) from the center point P1 of the cab 6 to the distal end of the tunnel unit 5; a distance LD (predetermined value) from the distal end of the tunnel unit 5 to a mounting position of the drive columns 7; a distance LR (predetermined value) from a center point of the rotunda 4 to the aforementioned connection point (located on the horizontal rotational axis CL4) where the rotunda 4 and the tunnel unit 5 are connected; a height HR (predetermined value) of the connection point; a radius HW (predetermined value) of the travel wheels 9; and a height difference LG between the reference point 6P and the straight line 100. A distance LE from the proximal end of the tunnel unit 5 (the aforementioned connection point) to the mounting position of the drive columns 7 can be calculated by subtracting the distance LD from a length LF, detected by the tunnel length sensor 28, of the tunnel unit 5.

Here, when the distance LE, which can be calculated by using the detection value LF of the tunnel length sensor 28, and the length LA of the lifting/lowering device 8, which is detected by the lifting/lowering sensor 27, are determined, a horizontal distance L2 from the center point of the rotunda 4 to the center point P2 of the travel device 10, and a height of the center point P2 of the travel device 10 (the height is expressed by a constant Z coordinate value indicating the radius HW), are uniquely determined. Similarly, a horizontal distance L1 from the center point of the rotunda 4 to the center point P1 of the cab 6, and a height of the center point P1 of the cab 6 (the height is expressed by a Z coordinate value), are also uniquely determined. Further, when the rotational angle Φr of the rotunda 4 is determined, the XY coordinate values of the center point P2 of the travel device 10, and the XY coordinate values of the center point P1 of the cab 6, are uniquely determined. Consequently, the position coordinates of the center point P2 of the travel device 10, and the position coordinates of the center point P1 of the cab 6, are uniquely determined. Further, when the cab rotational angle Φc detected by the cab angle sensor 25 is determined, the position coordinates of the reference point 6P on the distal end part 6a of the cab 6 are also uniquely determined.

Accordingly, the controller 50 sequentially obtains the detection value LF of the tunnel length sensor 28, the detection value LA of the lifting/lowering sensor 27, and the detection value Φr of the rotunda angle sensor 24. From these values, the position coordinates of the center point P2 of the travel device 10 and the position coordinates of the center point P1 of the cab 6 can be calculated based on forward kinematics. The controller 50 also sequentially obtains the cab rotational angle Φc in addition to the aforementioned detection values LF, LA, and Φr. Accordingly, the position coordinates of the reference point 6P on the distal end part 6a of the cab 6 can also be calculated based on forward kinematics. It should be noted that the reference point 6P of the cab 6 is set such that, when the cab 6 is seen from above in the direction of the rotational axis CL3, an angle formed by the center line Ed of the tunnel unit 5 and a line segment connecting between the reference point 6P and the center point P1 of the cab 6 is the cab rotational angle Φc. A straight line passing through the reference point 6P and the center point P1 of the cab 6, and a straight line extending along the distal end part 6a of the cab 6, are orthogonal to each other.

Next, one example of operations of the passenger boarding bridge 1 is described. Before the aircraft 3 arrives at the apron, the passenger boarding bridge 1 stands by at a predetermined standby position indicated by two-dot chain line of FIG. 1. A regular stop position for the aircraft 3 is a predetermined position at which the aircraft axis of the aircraft 3 is on a fuselage guide line AL, and the regular stop position is set in the extending direction of the fuselage guide line AL. Although the aircraft 3 is stopped targeting the regular stop position, it is not always that case that an actual stop position of the aircraft 3 is exactly the regular stop position. It should be noted that the fuselage guide line AL is drawn on the apron ground. An angle α that is formed by the fuselage guide line AL and the X-axis is prestored in the storage unit of the controller 50 as a predetermined value.

The standby position of the passenger boarding bridge 1 is the movement start position, from which the passenger boarding bridge 1 is to start moving at the time of performing docking with the entrance 3A (the door 3a) of the aircraft 3. At the time of performing docking of the passenger boarding bridge 1 with the entrance 3A of the aircraft 3, the cab 6 moves from the standby position (the position indicated by two-dot chain line in FIG. 1) to a temporary stop position (the position indicated by solid line in FIG. 1), and then moves to a docking position at which the cab 6 gets docked with the entrance 3A. When the cab 6 is undocked from the entrance 3A, the cab 6 returns to and stops at the standby position, and then the cab 6 stands by at the standby position until the operation of docking the cab 6 with the entrance of the next aircraft starts. It should be noted that in order for the cab 6 undocked from the aircraft 3 to return to the standby position, target position coordinates of the center point P2 of the travel device 10 for the cab 6 to be at the standby position are prestored in the controller 50.

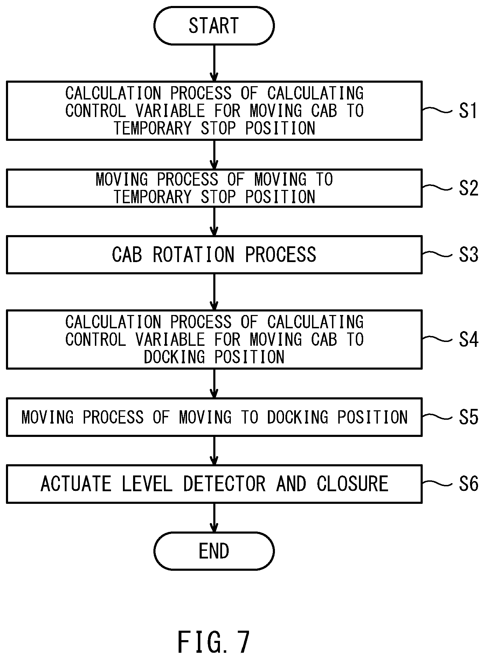

First, a brief description is given of a case where automatic control is performed, in which operations of the passenger boarding bridge 1 are automatically performed in accordance with control by the controller 50. FIG. 7 is a flowchart schematically showing one example of operations performed at the time of docking of the cab 6 of the passenger boarding bridge 1 with the aircraft 3. These operations are realized by control performed by the controller 50.

When the passenger boarding bridge 1 (the cab 6) is at the standby position, an operator presses an automatic control start button (one of the operation switches 33) on the control panel 31, and thereby automatic control described below is started.

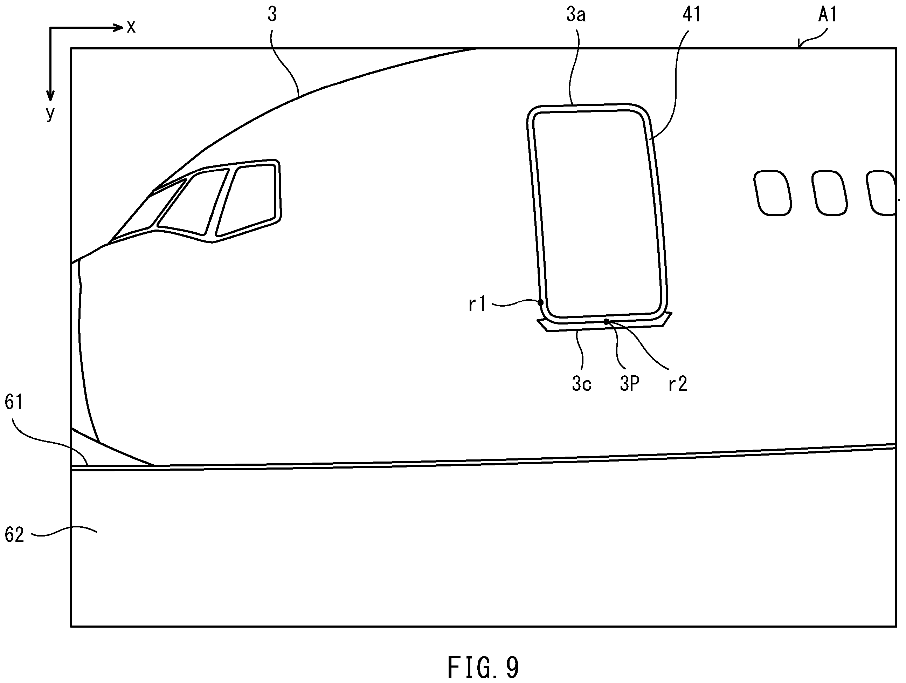

When the above start button is pressed, the controller 50 performs a calculation process of calculating a control variable for moving the cab 6 at the standby position to the temporary stop position (step S1). In step S1, first, the controller 50 causes the first and second cameras 21 and 22 to capture images of the entrance 3A (the door 3a) of the aircraft 3, respectively. FIG. 9 is a schematic diagram showing one example of an image captured by the first camera 21 when the cab 6 is at the standby position. A contour portion of the door 3a of the aircraft 3 is painted so that the door 3a can be visually recognized (a painted portion 41). In FIG. 9, x- and y-axes of a captured image A1 represent a camera coordinate system.

Subsequently, the controller 50 obtains captured image data of the images captured by the two cameras 21 and 22, and based on the captured image data, performs image processing to detect a reference point 3P on the door 3a, and based on a predetermined arithmetic formula, calculates position coordinates of the reference point 3P on the door 3a of the aircraft 3. At the time, the door 3a and the reference point 3P on the door 3a can be detected based on, for example, the contour painted portion 41 of the door 3a and the shape of a reinforcing plate 3c. As shown in FIG. 9, the reference point 3P on the door 3a is positioned on a middle portion of the door sill (or may be positioned on an upper-end middle portion of the reinforcing plate 3c provided immediately under the door 3a).

Further, after calculating the position coordinates of the reference point 3P on the door 3a, the controller 50 calculates target position coordinates of the reference point 6P on the distal end part 6a (the bumper 62) of the cab 6 at the temporary stop position. The target position of the reference point 6P of the cab 6 is, in a plan view, set to a predetermined position such that the distal end part 6a of the cab 6 is parallel to the fuselage guide line AL and is located forward away from the door 3a by approximately a predetermined distance (e.g., 1000 mm). To be more specific, the target position of the reference point 6P of the cab 6 is set, for example, such that the height position of the target position is the same as the height position of the reference point 3P on the door 3a, and such that a distance of the horizontal position of the target position to the reference point 3P on the door 3a in a direction parallel to the fuselage guide line AL is a predetermined distance, and also, a distance of the horizontal position of the target position to the reference point 3P on the door 3a in a direction perpendicular to the fuselage guide line AL is a predetermined distance. Then, a value (θc1) of an absolute angle θc of the cab 6 when the cab 6 at the temporary stop position is in such an orientation that the distal end part 6a is, in a plan view, parallel to the fuselage guide line AL is calculated. The absolute angle θc of the cab 6 is, as shown in FIG. 1, a rotational angle of the cab 6 calculated with respect to the positive direction of the X-axis. Then, by using the target position coordinates of the reference point 6P of the cab 6 and the absolute angle θc1 of the cab 6 at the temporary stop position, the controller 50 performs calculation based on inverse kinematics to calculate target position coordinates of the center point P2 of the travel device 10, a target length LA1 of the lifting/lowering device 8 (a target value of the length LA of the lifting/lowering device 8), and a target rotational angle Φc1 of the cab rotational angle Φc for the cab 6 to be at the temporary stop position.

Next, the controller 50 performs a moving process of moving the cab 6 to the temporary stop position in step S2. In the moving process, the cab 6 is moved from the standby position to the temporary stop position. Specifically, the controller 50 causes the travel device 10 to travel such that the coordinates of the center point P2 of the travel device 10 are brought into coincidence with the target position coordinates calculated in step S1, causes the lifting/lowering device 8 to extend or retract to adjust the length LA of the lifting/lowering device 8 to the target length LA1, and drives the cab rotator 6R to adjust the cab rotational angle Φc to the target rotational angle Φc1, thereby moving the cab 6 from the standby position to the temporary stop position.

Next, the controller 50 performs a cab rotation process in step S3 when the cab 6 is at the temporary stop position. In the cab rotation process, while the cab 6 is stopped at the temporary stop position, the controller 50 drives the cab rotator 6R, such that the distance between the distal end part 6a of the cab 6 and the aircraft 3 measured by one of the pair of distance sensors 23 and the distance between the distal end part 6a of the cab 6 and the aircraft 3 measured by the other one of the pair of distance sensors 23 are equalized. That is, in a plan view, the distal end part 6a of the cab 6 is made parallel to a tangent line TL, which touches a part, of the aircraft 3, with which the cab 6 is to be docked (the part is specifically the door 3a and the vicinity thereof; hereinafter, this part is referred to as "the cab 6-docked part" of the aircraft 3), the tangent line TL extending horizontally along the surface of the cab 6-docked part.

Next, the controller 50 performs a calculation process of calculating a control variable for moving the cab 6 at the temporary stop position to the docking position (step S4). In step S4, first, the controller 50 causes the first camera 21 to capture an image of the entrance 3A (the door 3a) of the aircraft 3. Subsequently, the controller 50 obtains captured image data of the image captured by the camera 21, and calculates position coordinates of the reference point 3P on the door 3a of the aircraft 3 based on the captured image data, distances each between the distal end part 6a of the cab 6 and the aircraft 3, the distances being measured by the respective distance sensors 23, and so forth. Here, the position coordinates of the reference point 3P on the door 3a are calculated with higher precision in step S4 than in step S1, because in step S4, the image data of the image captured in a shorter distance is used and accurate distance measurement is performed with the distance sensors 23.

Further, after calculating the position coordinates of the reference point 3P on the door 3a, the controller 50 calculates target position coordinates of the reference point 6P on the distal end part 6a (the bumper 62) of the cab 6 at the docking position. The target position of the reference point 6P of the cab 6 is, in a plan view, set to a predetermined position such that the distal end part 6a of the cab 6 is parallel to the tangent line TL and is located forward away from the door 3a by approximately a predetermined distance (e.g., 20 mm). To be more specific, the target position of the reference point 6P of the cab 6 is set, for example, such that the height position of the target position is slightly lower than the height position of the reference point 3P on the door 3a, and such that a distance of the horizontal position of the target position to the reference point 3P on the door 3a in a direction parallel to the tangent line TL is a predetermined distance, and also, a distance of the horizontal position of the target position to the reference point 3P on the door 3a in a direction perpendicular to the tangent line TL is a predetermined distance. Then, a value (θc2) of the absolute angle θc of the cab 6 when the cab 6 at the docking position is in such an orientation that the distal end part 6a is, in a plan view, parallel to the tangent line TL is calculated. Then, by using the target position coordinates of the reference point 6P of the cab 6 and the absolute angle θc2 of the cab 6 at the docking position, the controller 50 performs calculation based on inverse kinematics to calculate target position coordinates of the center point P2 of the travel device 10, a target length LA2 of the lifting/lowering device 8 (a target value of the length LA of the lifting/lowering device 8), and a target rotational angle Φc2 of the cab rotational angle Φc for the cab 6 to be at the docking position.

Next, the controller 50 performs a moving process of moving the cab 6 to the docking position in step S5. In the moving process, the cab 6 is moved from the temporary stop position to the docking position. Here, for example, the controller 50 causes the lifting/lowering device 8 to extend or retract to adjust the length LA of the lifting/lowering device 8 to the target length LA2, and drives the cab rotator 6R to adjust the cab rotational angle Φc to the target rotational angle Φc2. Thereafter, the controller 50 causes the travel device 10 to travel such that the coordinates of the center point P2 of the travel device 10 are brought into coincidence with the target position coordinates calculated in step S4. At the time, the controller 50 may cause the travel device 10 to travel such that the center point P2 of the travel device 10 moves toward the target position coordinates, and as described above, may stop the travel device 10 at a point when the center point P2 reaches the target position coordinates, or may stop the travel device 10 at a point when the distance between the distal end part 6a of the cab 6 and the aircraft 3, the distance being measured by the distance sensors 23 during the traveling, has become a predetermined distance. In the manner thus described, automatic docking of the cab 6 with the entrance 3A of the aircraft 3 is completed.

Further, in step S6, the controller 50 actuates the level detector 64, and also actuates the closure 63 to expand the bellows portion. Here, either one of actuating the level detector 64 or actuating the closure 63 may precede the other.

Thereafter, the door 3a of the aircraft 3 is opened by, for example, an operator. As described above, in this example, the docking of the cab 6 with the entrance 3A is performed by automatic control, and also, the closure 63 and the level detector 64 are actuated by automatic control.

The method of docking the cab 6 with the entrance 3A of the aircraft 3 by automatic control is not limited to the above-described method. For example, in step S1, differences in the position coordinates and the orientation (rotational angle) of the cab 6 between the standby position and the temporary stop position are calculated. Then, a travel distance and a travel direction of the travel device 10, an amount of lifting/lowering by the lifting/lowering device 8, and a rotation amount of the cab 6 that are necessary for compensating for the differences are calculated, and based thereon, the travel device 10, the lifting/lowering device 8, and the cab rotator 6R may be operated in step S2. Similarly, in step S4, differences in the position coordinates and the orientation (rotational angle) of the cab 6 between the temporary stop position and the docking position are calculated. Then, a travel distance and a travel direction of the travel device 10, an amount of lifting/lowering by the lifting/lowering device 8, and a rotation amount of the cab 6 that are necessary for compensating for the differences are calculated, and based thereon, the travel device 10, the lifting/lowering device 8, and the cab rotator 6R may be operated in step S5.

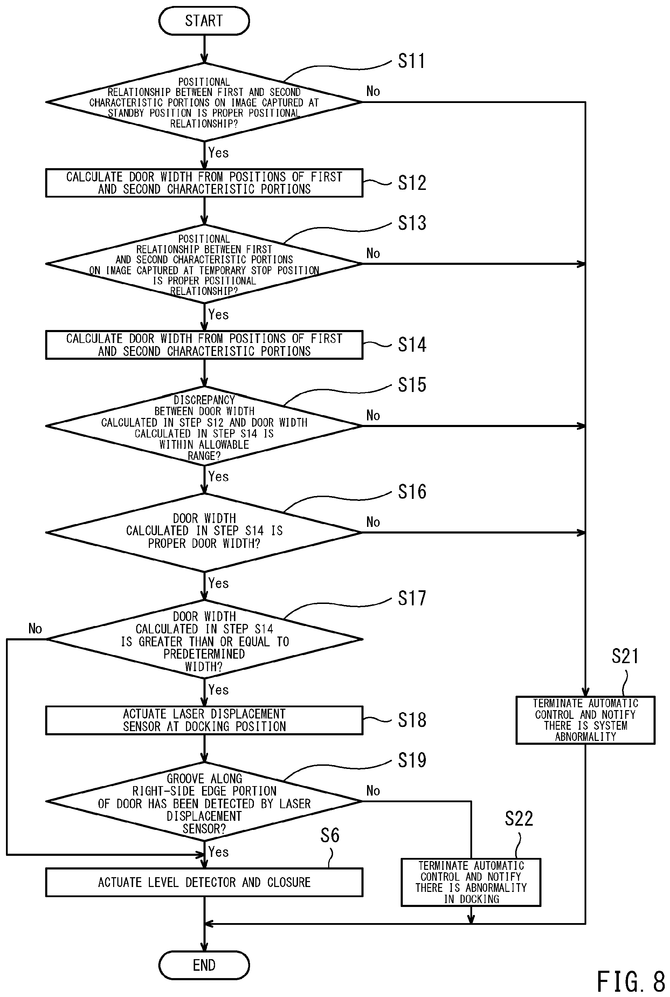

In the present embodiment, various determination processes are further performed during the above automatic control. FIG. 8 is a flowchart showing one example of the various determination processes performed during the automatic control of the passenger boarding bridge 1.

In step S11, first, when the cab 6 is at the standby position, the controller 50 detects a first characteristic portion r1 and a second characteristic portion r2 of the door 3a by using the captured image A1 (see FIG. 9) captured by the first camera 21 in the above-described step S1, and obtains xy coordinates that represent the positions of the first and second characteristic portions r1 and r2 in the camera coordinate system (a first-half function of the pre-moving door width calculator 52). It should be noted that the controller 50 defines an xy orthogonal coordinate system by setting a predetermined position (e.g., the upper left corner) of the captured image A1 of FIG. 9 as an origin (0, 0). The x coordinate value and the y coordinate value of any point on the captured image A1 are expressed by pixel values counted from the origin (0, 0). For example, in FIG. 9, the more distant to the right from the origin, which is the upper left corner of the captured image A1, the greater the x coordinate value. Also, the more distant downward from the origin, the greater the Y coordinate value.

The first characteristic portion r1 is a boundary point between a curved portion of a lower left corner of the painted portion 41 of the door 3a and a straight portion extending upward from the lower left corner. The second characteristic portion r2 is, in this example, a middle portion of the door sill, i.e., the same as the reference point 3P on the door 3a. The first and second characteristic portions r1 and r2 are present around the door 3a and away from each other in the width direction (left-right direction) of the door 3a. The first and second characteristic portions r1 and r2 are in a predetermined positional relationship (N), in which their positions are different from each other in both the left-right direction and the vertical direction of the door 3a. The predetermined positional relationship (N) herein is a relationship in which the position of the second characteristic portion r2 is lower than that of the first characteristic portion r1, and the second characteristic portion r2 is positioned on the right side of the first characteristic portion r1.

Subsequently, the controller 50 determines whether or not a positional relationship between the first and second characteristic portions r1 and r2, the positional relationship being obtained on the image, is the proper positional relationship (i.e., the predetermined positional relationship (N)) (a function of the image determiner 51). Here, in a case where the xy coordinates of the first characteristic portion r1 are (x1, y1) and the xy coordinates of the second characteristic portion r2 are (x2, y2), if x2 > x1 and y2 > y1 hold true, i.e., the positional relationship being the predetermined positional relationship (N), then the controller 50 determines that the positional relationship between the first and second characteristic portions r1 and r2 is the proper positional relationship. On the other hand, if x2 > x1 and y2 > y1 do not hold true, the controller 50 determines that the positional relationship between the first and second characteristic portions r1 and r2 is not the proper positional relationship, terminates the automatic control, and causes a notifier to notify that there is a system abnormality (step S21). The notifier may be the display device 34, which notifies the abnormality by displaying characters or the like, or may be a sound outputter (not shown) provided on the control panel 31. The sound outputter may notify the abnormality by outputting, for example, buzzer sounds and/or other sounds. The same applies to the "notifier" referred to in the description below.

Next, in step S12, the controller 50 calculates an actual width of the door 3a by using a difference between the x coordinate of the first characteristic portion r1 and the x coordinate of the second characteristic portion r2 (i.e., x2 - x1) on the captured image A1 of the first camera 21, and stores the calculated width (a second-half function of the pre-moving door width calculator 52). At the standby position, the two cameras 21 and 22 capture images of the entrance 3A, respectively, as mentioned above. Accordingly, the distance between the cab 6 and the entrance 3A can be calculated by, for example, triangulation. The width of the door 3a can be calculated by substituting the distance and a value obtained by doubling the above difference (x2 - x1) into a predetermined arithmetic formula.

Next, in step 13, when the cab 6 is at the temporary stop position, the controller 50 detects the first characteristic portion r1 and the second characteristic portion r2 of the door 3a by using the captured image captured by the first camera 21 in the above-described step S4, and obtains the xy coordinates of the first and second characteristic portions r1 and r2 (a first-half function of the pre-docking door width calculator 53). Next, similar to the case of step S11, the controller 50 determines whether or not the positional relationship between the first and second characteristic portions r1 and r2 is the proper positional relationship (a function of the image determiner 51). If it is determined that the positional relationship between the first and second characteristic portions r1 and r2 is not the proper positional relationship, the controller 50 terminates the automatic control, and causes the notifier to notify that there is a system abnormality (step S21).

Next, in step 14, the controller 50 calculates an actual width of the door 3a by using a difference between the x coordinate of the first characteristic portion r1 and the x coordinate of the second characteristic portion r2 on the captured image captured by the first camera 21 at the temporary stop position (a second-half function of the pre-docking door width calculator 53). At the temporary stop position, as described above, the distance between the cab 6 and the entrance 3A can be measured by the distance sensors 23. The width of the door 3a can be calculated by substituting the distance and a value obtained by doubling the above difference into a predetermined arithmetic formula.

Next, in step 15, the controller 50 calculates a discrepancy between the width of the door 3a calculated in step S12 and the width of the door 3a calculated in step S14, and determines whether or not the discrepancy is within a predetermined allowable range. In a case where the discrepancy is determined to be out of the allowable range, the controller 50 terminates the automatic control, and causes the notifier to notify that there is a system abnormality (step S21). The allowable range is set to such a narrow range that if the discrepancy is within the range, the door 3a subjected to the detection in step S11 and the door 3a subjected to the detection in step S13 can be recognized as the same door 3a.

In a case where the discrepancy is determined to be within the allowable range, the controller 50 determines whether or not the width of the door 3a calculated in step S14 is a proper width as a door width (step S16). If it is determined that the calculated width is not a proper with, the controller 50 terminates the automatic control, and causes the notifier to notify that there is a system abnormality (step S21).

Next, in step 17, the controller 50 determines whether or not the width of the door 3a calculated in step S14 is greater than or equal to a predetermined width (a function of the door width determiner 54).

Hereinafter, intentions of the processes in the above-described steps S16 and S17 are described. For example, assume a case where the width of the door 3a calculated in step S14 is W, a predetermined value slightly less than the width of the door of a small aircraft is t1, and a predetermined value between the width of the door of a mid-size aircraft and the width of the door of a large aircraft (i.e., the aforementioned predetermined width) is t2. In this case, the controller 50 determines in step S16 whether or not the width W of the door 3a is greater than the predetermined value t1, and if the width W of the door 3a is determined to be greater than the predetermined value t1, the controller 50 determines that the width W of the door 3a is a proper door width. That is, in a case where the width W of the door 3a is less than or equal to the predetermined value t1, the width W is not a proper aircraft door width, and it can be considered that there has been an error in door recognition, for example, in image processing. Also, in step S17, in a case where it is determined Yes in step S16, the controller 50 determines whether or not the width W of the door 3a is greater than or equal to the predetermined width t2. This is intended to determine whether or not the door 3a is the door of a large aircraft.

That is, if it is determined Yes in step S17, the door 3a is recognized as the door of a large aircraft, whereas if it is determined No in step S17, the door 3a is recognized as the door of a small or mid-size aircraft.

In a case where it is determined Yes in step S17, when the cab 6 gets docked with the entrance 3A of the aircraft 3, the controller 50 actuates the laser displacement sensor 20 (step S18). The detection region 20A of the laser displacement sensor 20 is predetermined.

FIG. 10 shows the detection region 20A (see also FIG. 5) of the laser displacement sensor 20. The door 3a shown in FIG. 10 is a door of a large aircraft. In FIG. 10, a two-dot chain line indicates the door 3a being in an opened state. There is the groove (gap) 3g between the periphery of the door 3a and the fuselage. The laser displacement sensor 20 performs detection of the groove 3g between the fuselage and the right-side edge portion of the door 3a of the large aircraft, and outputs to the controller 50 a detection result indicating whether or not the groove 3g has been detected. In a case where the cab 6 is properly docked with the entrance 3A of the large aircraft (i.e., in a case where the cab 6 is docked in such a state that the door 3a can be smoothly opened), the detection region 20A is set such that the groove 3g is detected within the detection region 20A. That is, in this example, a state where the groove 3g along the right-side edge portion of the door 3a of the aircraft is present within the detection region 20A is a state where the door 3a can be opened smoothly, and the detection region 20A serves as an allowable region.

Based on the detection result from the laser displacement sensor 20, the controller 50 determines whether or not the door 3a can be opened smoothly (a function of the door opening determiner 55). Specifically, in step S19, the controller 50 determines whether or not the groove 3g has been detected by the laser displacement sensor 20. If the groove 3g has not been detected yet, the controller 50 determines that the door 3a cannot be opened smoothly for the reason that the cab 6 is not properly docked with the entrance 3A, terminates the automatic control, and causes the notifier to notify that there is an abnormality in docking (step S22).

On the other hand, in a case where the groove 3g has been detected within the detection region 20A by the laser displacement sensor 20, the controller 50 determines that the cab 6 is properly docked with the entrance 3A and the door 3a can be opened smoothly, then performs the next step S6, and ends the automatic control. Step S6 is as previously described with reference to FIG. 7.

If it is determined No in step S17, it means that the door 3a is a door of a small or mid-size aircraft. Since high docking precision is not strictly required in the case of a small or mid-size aircraft door, the controller 50 performs step S6 and ends the automatic control.

In the above-described step S19, the determination is made based on whether or not the groove 3g is present within the detection region 20A of the laser displacement sensor 20. Alternatively, a numerical value indicating the position of the groove 3g may be detected, and the determination may be made based on whether or not the numerical value is within an allowable range.

After the automatic control is terminated in step S21, an operator docks the cab 6 with the aircraft 3 by manual control, and then the level detector 64 and the closure 63 are actuated.

After the automatic control is terminated in step S22, docking of the cab 6 with the aircraft 3 is performed again by manual control by the operator, and then the level detector 64 and the closure 63 are actuated. At the time of performing the docking of the cab 6 with the aircraft 3 again, the laser displacement sensor 20 may be actuated by manual operation. Then, based on a detection result from the laser displacement sensor 20, the controller 50 may determine whether or not the cab 6 has been properly docked (i.e., determine whether or not the door 3a can be opened smoothly), and then may cause the notifier, such as the display device 34, to notify the operator of a result of the determination.

In the present embodiment, through the determination processes in steps S11, S13, S15, and S16, for example, errors in image processing can be detected, including an error in image recognition to recognize the door 3a or the like.

In a case where the aircraft 3 is a large aircraft, i.e., in a case where the door 3a is large aircraft door, after the cab 6 is automatically docked with the entrance 3A and before the door 3a is opened, the laser displacement sensor 20 is actuated. Then, based on a detection result from the laser displacement sensor 20, the controller 50 determines whether or not the door 3a can be opened smoothly, and if it is determined that the door 3a cannot be opened smoothly, the information (that there is an abnormality in docking) is notified. Accordingly, docking of the cab 6 with the aircraft 3 is performed again, but by manual control by the operator. This makes it possible to prevent interference between the door of the large aircraft and the cab from occurring when the door is opened.

### [Variations]

The above embodiment has illustratively described a case where the cab 6 gets docked with the entrance 3A of the aircraft 3 by automatic control. Hereinafter, a case where the cab 6 gets docked with the entrance 3A by manual control is described.

In the case of manual control, traveling operation of the travel device 10, lifting/lowering operation of the lifting/lowering device 8, and rotating operation of the cab rotator 6R can be performed by the operator operating the operating device 30. In the case of manual control, for example, the following configuration may be adopted: at the standby position, when aircraft type information indicating the aircraft type of the aircraft 3, with which the cab 6 is to be docked, is inputted to the controller 50, the amount of lifting/lowering by the lifting/lowering device 8 (i.e., the length LA of the lifting/lowering device 8) can be automatically set to an amount of lifting/lowering corresponding to the height of the cab 6 at the time of docking of the cab. In the case of adopting such a configuration, if the aircraft type information inputted to the controller 50 indicates that the aircraft 3 is a large aircraft, the controller 50 may actuate the laser displacement sensor 20 after the cab 6 is docked with the aircraft 3 and before the door 3a is opened, and then, if the groove 3g is not detected by the laser displacement sensor 20, the controller 50 may cause the notifier, such as the display device 34, to notify that there is an abnormality in docking.

For example, aircraft type correspondence information is prestored in the storage unit of the controller 50. In the aircraft type correspondence information, for each aircraft type of a plurality of aircraft types, information about a predetermined lifting/lowering amount by the lifting/lowering device 8 (i.e., information about a predetermined length LA of the lifting/lowering device 8) for the cab to be docked with an aircraft indicated by the aircraft type is associated with information about whether or not the aircraft indicated by the aircraft type is a large aircraft (having a large door) whose door width is greater than or equal to the aforementioned predetermined width t2.

Then, at the standby position, the operator operates the operating device 30 to input aircraft type information about the aircraft 3, with which the cab 6 is to be docked, and presses a presetting button. The inputting of the aircraft type information by the operator may be performed, for example, in the following manner: the display device 34 displays a plurality of aircraft types; and the operator selects one of the aircraft types. When the presetting button is pressed, the controller 50 refers to the aircraft type correspondence information, and causes the lifting/lowering device 8 to perform lifting/lowering by a lifting/lowering amount for cab docking, the lifting/lowering amount corresponding to the inputted aircraft type (aircraft type information). Thereafter, the operator operates the operating device 30 to dock the cab 6 with the entrance 3A of the aircraft 3.

Subsequently, the operator operates the operating device 30 to actuate the closure 63 to extend the closure 63 such that the bellows portion expands and to actuate the level detector 64. It should be noted that either one of actuating the closure 63 to extend the closure 63 or actuating the level detector 64 may precede the other.

Here, the controller 50 refers to the aircraft type correspondence information, and based on the aircraft type information inputted at the standby position, identifies whether or not the aircraft 3 is a large aircraft (i.e., whether or not the width of the door 3a is greater than or equal to the predetermined width t2) (a function as a door width identifier). Then, in a case where the aircraft 3 is a large aircraft, the controller 50 actuates the laser displacement sensor 20 when the closure 63 has started extending, or when the level detector 64 has started operating, based on an operation signal from the operating device 30. Then, if the groove 3g is not detected by the laser displacement sensor 20, the controller 50 determines that the door 3a cannot be opened smoothly for the reason that the cab 6 is not properly docked with the entrance 3A, and causes the notifier to notify that there is an abnormality in docking. Accordingly, the operator performs the docking again. This makes it possible to prevent interference between the door of the large aircraft and the cab from occurring when the door is opened. It should be noted that the timing of actuating the laser displacement sensor 20 need not be when the level detector 64 has started operating, but may be when the contact limit switch of the level detector 64 is turned ON as a result of the level detector 64 starting operating. Also, the laser displacement sensor 20 may be actuated not when the closure 63 has started extending, but actuated based on a stop signal to stop the closure 63 from extending (i.e., actuated when the extension of the closure 63 is ended). As thus described, the laser displacement sensor 20 may be actuated based on at least one of a manually controlled operation of causing the closure 63 to extend and a manually controlled operation of causing the level detector to start operating.

For each aircraft type, a rotational angle (Φc) of the cab 6 for the cab 6 to be docked with an aircraft indicated by the aircraft type may be further stored as the aircraft type correspondence information, and when the aforementioned presetting button is pressed, the controller 50 may refer to the aircraft type correspondence information, and operate the cab rotator 6R to rotate the cab 6 at a rotational angle for cab docking, the rotational angle corresponding to the inputted aircraft type (aircraft type information).

In the above-described embodiment, the operator inputs the aircraft type information to the controller 50. Alternatively, the following configuration may be adopted. At the standby position, the controller 50 receives, from an external device such as a VDGS (Visual Docking Guidance System) or FIDS (Flight Information Display System), an input of aircraft type information about an aircraft with which the cab 6 is to be docked. In this case, when traveling of the travel device 10 is started by the operator operating the operating device 30, concurrently with the start of the traveling, the controller 50 refers to the above-described aircraft type correspondence information, and causes the lifting/lowering device 8 to perform lifting/lowering by a lifting/lowering amount for cab docking, the lifting/lowering amount corresponding to the inputted aircraft type (aircraft type information). Thereafter, the operator operates the operating device 30 to dock the cab 6 with the entrance 3A of the aircraft 3.

Also in this case, similar to the above-described case, the controller 50 refers to the aircraft type correspondence information, and if the aircraft type information inputted at the standby position is a large aircraft, the controller 50 may actuate the laser displacement sensor 20 based on at least one of a manually controlled operation of causing the closure 63 to extend and a manually controlled operation of causing the level detector 64 to start operating, for example, when the closure 63 has started extending, when the closure 63 has ended the extending, when the level detector 64 has started operating, or when the contact limit switch of the level detector 64 is turned ON as a result of level detector 64 starting operating.

Further, for example, in cases where the operating device 30 includes an actuating button to actuate the laser displacement sensor 20 and the aircraft 3 is a large aircraft, including a case where the entire operation of the passenger boarding bridge 1 is carried out based on operations performed by the operator, after the cab 6 is docked with the entrance 3A and before the door 3a is opened, the operator may actuate the laser displacement sensor 20 by operating the actuating button.

In the present embodiment including the above-described variations, in a case where the aircraft 3 is a large aircraft, whether or not the door 3a can be opened smoothly is determined by detecting, with the laser displacement sensor 20, whether or not the groove 3g along the right-side edge portion of the door 3a of the aircraft 3 is present within the allowable region (the detection region 20A). However, this is merely a non-limiting example. For example, whether or not the door 3a can be opened smoothly may be determined by detecting, with the laser displacement sensor, whether or not the groove 3g along the left-side edge portion of the door 3a of the aircraft 3 is present within its allowable region. Alternatively, whether or not the door 3a can be opened smoothly may be determined by detecting, with the laser displacement sensor, whether or not the grooves 3g along both side edge portions of the door 3a of the aircraft 3 in the width direction (i.e., both the right-side edge portion and the left-side edge portion of the door 3a) are present within their respective allowable regions.

From the foregoing description, numerous modifications and other embodiments of the present invention are obvious to those skilled in the art. Accordingly, the foregoing description is to be construed as illustrative only, and is provided for the purpose of teaching those skilled in the art the best mode for carrying out the present invention. The structural and/or functional details may be substantially modified without departing from the scope of the present invention.

### Industrial Applicability

The present invention is useful, for example, as a passenger boarding bridge that makes it possible to prevent interference between the door of a large aircraft and the cab from occurring when the door is opened.

### Reference Signs List

- 1: passenger boarding bridge
- 3: aircraft
- 3A: entrance
- 3a: door
- 3g: groove
- 4: rotunda
- 5: tunnel unit
- 6: cab
- 6R: cab rotator
- 8: lifting/lowering device
- 10: travel device
- 20: laser displacement sensor
- 21: first camera
- 50: controller
- 51: image determiner
- 52: pre-moving door width calculator
- 53: pre-docking door width calculator
- 54: door width determiner
- 55: door opening determiner
- 63: closure
- 64: level detector
- r1: first characteristic portion
- r2: second characteristic portion

## Claims

1. A passenger boarding bridge (1) comprising:
a horizontally rotatable rotunda (4) connectable to a terminal building (2);
a tunnel unit (5) whose proximal end is connected to the rotunda in such a manner that the tunnel unit is liftable and lowerable, the tunnel unit being configured to be extendable and retractable in a longitudinal direction of the tunnel unit;
a cab (6) rotatably provided at a distal end of the tunnel unit;
a mover (6R, 8, 10) that moves the cab to dock the cab with an entrance (3A) of an aircraft (3);
a door position detector (20) that is provided inside the cab and that detects, after the cab is docked with the entrance by the mover, a position of an edge portion of a door (3a) of the entrance in a width direction of the door with respect to the cab in a case where a width of the door is greater than or equal to a predetermined width;
**characterised in** further comprising:
a door opening determiner (55) that determines whether or not the door of the entrance can be opened smoothly based on whether or not the position of the edge portion of the door in the width direction of the door, the position being detected by the door position detector, is present within a predetermined allowable region; and
a notifier (34) that notifies that there is an abnormality in a case where the door opening determiner has determined that the door of the entrance cannot be opened smoothly.

2. The passenger boarding bridge (1) according to claim 1, **characterised in that**
the mover (6R, 8, 10) is configured to perform, by automatic control, an operation of:
moving the cab (6) from a predetermined standby position, from which the cab is to start moving, to a temporary stop position, at which the cab is located forward away from the entrance (3A) by a predetermined distance; and then
moving the cab to a position at which the cab gets docked with the entrance, the passenger boarding bridge further comprises:
a camera (21, 22) that is mounted to the cab and that captures an image (A1) of the entrance of the aircraft (3);
a pre-docking door width calculator (53) that detects, when the cab is at the temporary stop position, a first characteristic portion (r1) and a second characteristic portion (r2) based on the image of the entrance captured by the camera, the first and second characteristic portions being present around the door (3a) of the entrance and being away from each other in the width direction of the door, and calculates the width of the door based on positions of the respective first and second characteristic portions on the image; and
a door width determiner (54) that determines whether or not the width of the door calculated by the pre-docking door width calculator is greater than or equal to the predetermined width, and
the door position detector (20) is configured to detect the position of the edge portion of the door in the width direction of the door with respect to the cab in a case where the door width determiner has determined that the width of the door calculated by the pre-docking door width calculator is greater than or equal to the predetermined width.

3. The passenger boarding bridge (1) according to claim 2, **characterised in** further comprising a pre-moving door width calculator (52) that detects, when the cab (6) is at the standby position, the first and second characteristic portions (r1, r2) based on the image (A1) of the entrance (3A) captured by the camera (21, 22), and calculates the width of the door (3a) based on the positions of the respective first and second characteristic portions on the image, wherein
the passenger boarding bridge is configured to terminate the automatic control of the operation of the mover (6R, 8, 10) in a case where a discrepancy between the width of the door calculated by the pre-moving door width calculator and the width of the door calculated by the pre-docking door width calculator (53) is out of a predetermined allowable range.

4. The passenger boarding bridge (1) according to claim 2 or 3, **characterised in that**
the first and second characteristic portions (r1, r2) are in a predetermined positional relationship in which their positions are different from each other in both a left-right direction and a vertical direction of the door (3a),
the passenger boarding bridge further comprises an image determiner (51) that determines whether or not a positional relationship between the first and second characteristic portions on the image (A1) is the predetermined positional relationship, and
the passenger boarding bridge is configured to terminate the automatic control of the operation of the mover (6R, 8, 10) in a case where the image determiner has determined that the positional relationship between the first and second characteristic portions is not the predetermined positional relationship.

5. The passenger boarding bridge (1) according to any one of claims 2 to 4, **characterised in** further comprising:
a bellows-shaped closure (63) that is provided at a distal end of the cab (6) and that is extendable and contractible in a front-back direction; and
a level detector (64) that is mounted to the cab and that comes into contact with the aircraft (3) and detects an upward/downward movement of the aircraft with respect to the cab, wherein
the passenger boarding bridge is configured to:
perform automatic control of operations of the closure and the level detector, following the automatic control of the operation of the mover (6R, 8, 10); and
terminate the automatic control of the operations of the closure and the level detector in a case where the door opening determiner (55) has determined that the door (3a) of the entrance (3A) cannot be opened smoothly.

6. The passenger boarding bridge (1) according to claim 1, **characterised in that**
the mover (6R, 8, 10) is configured to perform, by manual control, an operation of moving the cab (6) from a predetermined standby position, from which the cab is to start moving, to a position at which the cab gets docked with the entrance (3A),
the passenger boarding bridge further comprises:
a bellows-shaped closure (63) that is provided at a distal end of the cab and that is extendable and contractible in a front-back direction;
a level detector (64) that is mounted to the cab and that comes into contact with the aircraft (3) and detects an upward/downward movement of the aircraft with respect to the cab; and
a door width identifier that receives an input of aircraft type information about the aircraft, with which the cab is to be docked, and based on the inputted aircraft type information, identifies whether or not the width of the door (3a) of the aircraft is greater than or equal to the predetermined width, and
in a case where the door width identifier has identified that the width of the door of the aircraft is greater than or equal to the predetermined width, the door position detector (20) is configured to detect, after the cab is docked with the entrance, the position of the edge portion of the door in the width direction of the door with respect to the cab based on at least one of a manually controlled operation of causing the closure to extend and a manually controlled operation of causing the level detector to start operating.

7. The passenger boarding bridge (1) according to any one of claims 1 to 6, **characterised in that**
the door position detector (20) is a laser displacement sensor (20) that detects a groove (3g) between a fuselage and the edge portion of the door (3a) in the width direction of the door.

## Patentansprüche

1. Fluggastbrücke (1), umfassend:
eine horizontal drehbare Rotunde (4), die mit einem Terminalgebäude (2) verbunden werden kann;
eine Tunneleinheit (5), deren proximales Ende mit der Rotunde so verbunden ist, dass die Tunneleinheit angehoben und abgesenkt werden kann, wobei die Tunneleinheit konfiguriert ist, um in Längsrichtung der Tunneleinheit ausfahrbar und einfahrbar zu sein;
eine Kabine (6), die drehbar an einem distalen Ende der Tunneleinheit vorgesehen ist;
eine Bewegungsvorrichtung (6R, 8, 10), die die Kabine bewegt, um die Kabine an einem Eingang (3A) eines Flugzeugs (3) anzudocken;
einen Türpositionsdetektor (20), der innerhalb der Kabine vorgesehen ist und der, nachdem die Kabine durch die Bewegungsvorrichtung an der Öffnung angedockt wurde, eine Position eines Randabschnitts einer Tür (3a) der Öffnung in einer Breitenrichtung der Tür in Bezug auf die Kabine in einem Fall erfasst, in dem eine Breite der Tür größer oder gleich einer vorbestimmten Breite ist;
**dadurch gekennzeichnet, dass** sie weiter Folgendes umfasst:
eine Türöffnungsbestimmungseinrichtung (55), die auf der Grundlage der Frage, ob die Position des Randabschnitts der Tür in der Breitenrichtung der Tür, die von dem Türpositionsdetektor erfasst wird, innerhalb eines vorbestimmten zulässigen Bereichs liegt, bestimmt, ob die Eingangstür reibungslos geöffnet werden kann oder nicht; und
eine Benachrichtigungseinrichtung (34), die eine Störung meldet, wenn die Türöffnungsbestimmungseinrichtung bestimmt hat, dass sich die Eingangstür nicht reibungslos öffnen lässt.

2. Fluggastbrücke (1) nach Anspruch 1, **dadurch gekennzeichnet, dass**
die Bewegungsvorrichtung (6R, 8, 10) konfiguriert ist, um durch automatische Steuerung einen Vorgang auszuführen, des:
Bewegens der Kabine (6) aus einer vorbestimmten Standby-Position, aus der die Kabine ihre Fahrt beginnen soll, zu einer vorübergehenden Halteposition, in der sich die Kabine in einem vorbestimmten Abstand vor dem Eingang (3A) befindet; und dann
Bewegen der Kabine in eine Position, in der die Kabine mit dem Eingang verbunden wird,
die Fluggastbrücke weiter Folgendes umfasst:
eine Kamera (21, 22), die an der Kabine angebracht ist und ein Bild (A1) des Eingangs des Flugzeugs (3) aufnimmt;
eine Vor-Andock-Türbreitenberechnungseinrichtung (53), die, wenn sich die Kabine in der vorübergehenden Halteposition befindet, einen ersten charakteristischen Abschnitt (r1) und einen zweiten charakteristischen Abschnitt (r2) auf der Grundlage des von der Kamera aufgenommenen Bildes des Eingangs erfasst, wobei der erste und der zweite charakteristische Abschnitt um die Tür (3a) des Eingangs herum vorhanden sind und in Breitenrichtung der Tür voneinander entfernt sind, und die Breite der Tür auf der Grundlage der Positionen des jeweiligen ersten und zweiten charakteristischen Abschnitts auf dem Bild berechnet; und
eine Türbreitenbestimmungseinrichtung (54), die bestimmt, ob die von der Vor-Andock-Türbreitenberechnungseinrichtung berechnete Türbreite größer oder gleich der vorbestimmten Breite ist, und
der Türpositionsdetektor (20) konfiguriert ist, um die Position des Randbereichs der Tür in Breitenrichtung der Tür in Bezug auf die Kabine in einem Fall zu erfassen, in dem die Türbreitenbestimmungseinrichtung bestimmt hat, dass die von der Vor-Andock-Türbreitenberechnungseinrichtung berechnete Breite der Tür größer oder gleich der vorbestimmten Breite ist.

3. Fluggastbrücke (1) nach Anspruch 2, **dadurch gekennzeichnet, dass** sie weiter eine Vorbewegungs-Türbreitenberechnungseinrichtung (52) umfasst, die, wenn sich die Kabine (6) in der Standby-Position befindet, den ersten und den zweiten charakteristischen Abschnitt (r1, r2) auf der Grundlage des von der Kamera (21, 22) aufgenommenen Bildes (A1) des Eingangs (3A) erfasst und die Breite der Tür (3a) auf der Grundlage der Positionen des ersten und zweiten charakteristischen Abschnitts auf dem Bild berechnet, wobei
die Fluggastbrücke so konfiguriert ist, dass sie die automatische Steuerung der Bewegungsvorrichtung (6R, 8, 10) beendet, wenn die von der Vorbewegungs-Türbreitenberechnungseinrichtung berechnete Türbreite und die von der Vor-Andock-Türbreitenberechnungseinrichtung (53) berechnete Türbreite um mehr als einen vorbestimmten zulässigen Bereich voneinander abweichen.

4. Fluggastbrücke (1) nach Anspruch 2 oder 3, **dadurch gekennzeichnet, dass**
der erste und der zweite charakteristische Abschnitt (r1, r2) in einer vorbestimmten Positionsbeziehung zueinander stehen, in der sich ihre Positionen sowohl in der Links-Rechts-Richtung als auch in der vertikalen Richtung der Tür (3a) voneinander unterscheiden,
die Fluggastbrücke weiter eine Bildbestimmungseinrichtung (51) umfasst, die bestimmt, ob eine Positionsbeziehung zwischen dem ersten und dem zweiten charakteristischen Abschnitt auf dem Bild (A1) die vorbestimmte Positionsbeziehung ist oder nicht, und
die Fluggastbrücke konfiguriert ist, um die automatische Steuerung des Betriebs der Bewegungsvorrichtung (6R, 8, 10) zu beenden, wenn die Bildbestimmungseinrichtung bestimmt hat, dass die Positionsbeziehung zwischen dem ersten und dem zweiten charakteristischen Abschnitt nicht die vorbestimmte Positionsbeziehung ist.

5. Fluggastbrücke (1) nach einem der Ansprüche 2 bis 4, **dadurch gekennzeichnet, dass** sie weiter Folgendes umfasst:
einen balgförmigen Verschluss (63), der an einem distalen Ende der Kabine (6) vorgesehen ist und in einer Vorder-Rück-Richtung ausfahrbar und zusammenziehbar ist; und
einen Niveaudetektor (64), der an der Kabine angebracht ist und mit dem Flugzeug (3) in Kontakt kommt und eine Aufwärts-/Abwärtsbewegung des Flugzeugs in Bezug auf die Kabine erfasst, wobei
die Fluggastbrücke konfiguriert ist, um:
eine automatische Steuerung des Betriebs der Schließvorrichtung und des Niveaudetektors nach der automatischen Steuerung des Betriebs der Bewegungsvorrichtung (6R, 8, 10) durchzuführen; und
die automatische Steuerung des Betriebs der Schließvorrichtung und des Niveaudetektors zu beenden, wenn die Türöffnungsbestimmungseinrichtung (55) bestimmt hat, dass die Tür (3a) des Eingangs (3A) nicht reibungslos geöffnet werden kann.

6. Fluggastbrücke (1) nach Anspruch 1, **dadurch gekennzeichnet, dass**
die Bewegungsvorrichtung (6R, 8, 10) konfiguriert ist, um durch manuelle Steuerung eine Bewegung der Kabine (6) von einer vorbestimmten Standby-Position, von der aus die Kabine ihre Bewegung beginnen soll, zu einer Position auszuführen, an der die Kabine an dem Eingang (3A) andockt,
die Fluggastbrücke weiter Folgendes umfasst:
einen balgförmigen Verschluss (63), der an einem distalen Ende der Kabine vorgesehen ist und in einer Vorder-Rück-Richtung ausfahrbar und zusammenziehbar ist;
einen Niveaudetektor (64), der an der Kabine angebracht ist und mit dem Flugzeug (3) in Kontakt kommt und eine Aufwärts-/Abwärtsbewegung des Flugzeugs in Bezug auf die Kabine erfasst; und
eine Türbreiten-Identifizierungseinrichtung, die eine Eingabe von Informationen über den Flugzeugtyp des Flugzeugs empfängt, an das die Kabine angedockt werden soll, und auf der Grundlage der eingegebenen Informationen über den Flugzeugtyp identifiziert, ob die Breite der Tür (3a) des Flugzeugs größer oder gleich der vorbestimmten Breite ist, und
in einem Fall, in dem die Türbreiten-Identifizierungseinrichtung festgestellt hat, dass die Breite der Tür des Flugzeugs größer oder gleich der vorbestimmten Breite ist, der Türpositionsdetektor (20) konfiguriert ist, um nach dem Andocken der Kabine an den Eingang die Position des Randbereichs der Tür in Breitenrichtung der Tür in Bezug auf die Kabine zu erfassen, basierend auf mindestens einem von einer manuell gesteuerten Operation, die die Ausdehnung der Schließvorrichtung veranlasst, und einer manuell gesteuerten Operation, die den Niveaudetektor veranlasst, mit dem Arbeiten zu beginnen.

7. Fluggastbrücke (1) nach einem der Ansprüche 1 bis 6,
**dadurch gekennzeichnet, dass**
der Türpositionsdetektor (20) ein Laserverschiebungssensor (20) ist, der eine Nut (3g) zwischen einem Rumpf und dem Randbereich der Tür (3a) in Breitenrichtung der Tür erfasst.

## Revendications

1. Passerelle d'embarquement de passagers (1) comprenant :
une rotonde (4) pouvant pivoter horizontalement et pouvant être reliée à un bâtiment terminal (2) ;
une unité de tunnel (5) dont l'extrémité proximale est reliée à la rotonde de telle manière que l'unité de tunnel peut être soulevée et abaissée, l'unité de tunnel étant configurée pour être extensible et rétractable dans le sens longitudinal de l'unité de tunnel ;
une cabine (6) montée de manière rotative à une extrémité distale de l'unité de tunnel ;
un dispositif de déplacement (6R, 8, 10) qui déplace la cabine pour la faire accoster à une entrée (3A) d'un avion (3) ;
un détecteur de position de porte (20) qui est prévu à l'intérieur de la cabine et qui détecte, après que le dispositif de déplacement a fait accoster la cabine à l'entrée, une position d'une partie de bord d'une porte (3a) de l'entrée dans une direction de largeur de la porte par rapport à la cabine dans le cas où une largeur de la porte est supérieure ou égale à une largeur prédéterminée ;
**caractérisée en ce qu'**elle comprend en outre :
un dispositif de détermination d'ouverture de porte (55) qui détermine si la porte de l'entrée peut être ouverte sans à-coups en fonction du fait que la position de la partie de bord de la porte dans le sens de la largeur de la porte, la position étant détectée par le détecteur de position de porte, se situe ou non dans une zone admissible prédéterminée ; et
un dispositif de notification (34) qui signale qu'il y a une anomalie dans le cas où le dispositif de détermination d'ouverture de porte a déterminé que la porte de l'entrée ne peut être ouverte sans à-coups.

2. Passerelle d'embarquement de passagers (1) selon la revendication 1, **caractérisée en ce que**
le dispositif de déplacement (6R, 8, 10) est configuré pour mettre en œuvre, par commande automatique, une opération consistant à :
déplacer la cabine (6) d'une position d'attente prédéterminée, à partir de laquelle la cabine doit commencer à se déplacer, vers une position d'arrêt temporaire, à laquelle la cabine est située à une distance prédéterminée en avant de l'entrée (3A) ; puis
déplacer la cabine vers une position dans laquelle la cabine est accostée à l'entrée, la passerelle d'embarquement de passagers comprenant en outre :
une caméra (21, 22) qui est montée sur la cabine et qui capture une image (A1) de l'entrée de l'avion (3) ;
un calculateur de largeur de porte avant accostage (53) qui détecte, lorsque la cabine se situe dans la position d'arrêt temporaire, une première partie caractéristique (r1) et une deuxième partie caractéristique (r2) sur la base de l'image de l'entrée capturée par la caméra, les première et deuxième parties caractéristiques étant présentes autour de la porte (3a) de l'entrée et étant éloignées l'une de l'autre dans le sens de la largeur de la porte, et calcule la largeur de la porte sur la base des positions des première et deuxième parties caractéristiques respectives sur l'image ; et
un dispositif de détermination de largeur de la porte (54) qui détermine si la largeur de la porte calculée par le calculateur de largeur de porte avant accostage est ou non supérieure ou égale à la largeur prédéterminée, et
le détecteur de position de porte (20) est configuré pour détecter la position de la partie de bord de la porte dans le sens de la largeur de la porte par rapport à la cabine dans le cas où le dispositif de détermination de largeur de porte a déterminé que la largeur de la porte calculée par le calculateur de largeur de porte avant accostage est supérieure ou égale à la largeur prédéterminée.

3. Passerelle d'embarquement de passagers (1) selon la revendication 2, **caractérisée en ce qu'**elle comprend en outre un calculateur de largeur de porte avant déplacement (52) qui détecte, lorsque la cabine (6) est en position d'attente, les première et deuxième parties caractéristiques (r1, r2) sur la base de l'image (A1) de l'entrée (3A) capturée par la caméra (21, 22), et calcule la largeur de la porte (3a) sur la base des positions des première et deuxième parties caractéristiques respectives sur l'image, dans laquelle
la passerelle d'embarquement des passagers est configurée pour mettre fin à la commande automatique du fonctionnement du dispositif de déplacement (6R, 8, 10) dans le cas où un écart entre la largeur de la porte calculée par le calculateur de largeur de porte avant déplacement et la largeur de la porte calculée par le calculateur de largeur de porte avant accostage (53) est hors d'une plage admissible prédéterminée.

4. Passerelle d'embarquement de passagers (1) selon la revendication 2 ou 3, **caractérisée en ce que**
les première et deuxième parties caractéristiques (r1, r2) sont dans une relation de position prédéterminée dans laquelle leurs positions sont différentes l'une de l'autre à la fois dans une direction gauche-droite et dans une direction verticale de la porte (3a),
la passerelle d'embarquement comprend en outre un dispositif de détermination d'image (51) qui détermine si la relation de position entre les première et deuxième parties caractéristiques sur l'image (A1) est la relation de position prédéterminée, et
la passerelle d'embarquement de passagers est configurée pour mettre fin à la commande automatique du fonctionnement du dispositif de déplacement (6R, 8, 10) dans le cas où le dispositif de détermination d'image a déterminé que la relation de position entre les première et deuxième parties caractéristiques n'est pas la relation de position prédéterminée.

5. Passerelle d'embarquement (1) selon l'une quelconque des revendications 2 à 4, **caractérisée en ce qu'**elle comprend en outre :
une fermeture en forme de soufflet (63) qui est disposée à une extrémité distale de la cabine (6) et qui peut être étendue et contractée dans une direction avant-arrière ; et
un détecteur de niveau (64) qui est monté sur la cabine et qui entre en contact avec l'avion (3) et détecte un mouvement ascendant/descendant de l'avion par rapport à la cabine, dans laquelle
la passerelle d'embarquement de passagers est configurée pour :
mettre en œuvre une commande automatique des opérations de la fermeture et du détecteur de niveau, à la suite de la commande automatique de l'opération du dispositif de déplacement (6R, 8, 10) ; et
mettre fin au contrôle automatique des opérations de la fermeture et du détecteur de niveau dans le cas où le dispositif de détermination d'ouverture de porte (55) a déterminé que la porte (3a) de l'entrée (3A) ne peut pas être ouverte sans à-coups.

6. Passerelle d'embarquement de passagers (1) selon la revendication 1, **caractérisée en ce que**
le dispositif de déplacement (6R, 8, 10) est configuré pour mettre en œuvre, par commande manuelle, une opération de déplacement de la cabine (6) depuis une position d'attente prédéterminée, à partir de laquelle la cabine doit commencer à se déplacer, vers une position dans laquelle la cabine est accostée à l'entrée (3A),
la passerelle d'embarquement de passagers comprenant en outre :
une fermeture en forme de soufflet (63) qui est fournie à une extrémité distale de la cabine et qui peut être étendue et contractée dans une direction avant-arrière ;
un détecteur de niveau (64) qui est monté sur la cabine et qui entre en contact avec l'avion (3) et détecte un mouvement vers le haut/vers le bas de l'avion par rapport à la cabine ; et
un identifiant de largeur de porte qui reçoit une entrée d'informations sur le type d'avion auquel la cabine doit être accostée et, sur la base des informations sur le type d'avion entrées, identifie si la largeur de la porte (3a) de l'avion est supérieure ou égale à la largeur prédéterminée, et
dans le cas où l'identificateur de largeur de porte a identifié que la largeur de la porte de l'avion est supérieure ou égale à la largeur prédéterminée, le détecteur de position de porte (20) est configuré pour détecter, après accostage de la cabine à l'entrée, la position de la partie de bord de la porte dans le sens de la largeur de la porte par rapport à la cabine sur la base d'au moins l'une parmi une opération commandée manuellement consistant à faire s'étendre la fermeture et une opération commandée manuellement consistant à faire démarrer le détecteur de niveau.

7. Passerelle d'embarquement (1) selon l'une quelconque des revendications 1 à 6, **caractérisée en ce que**
le détecteur de position de porte (20) est un capteur de déplacement laser (20) qui détecte une rainure (3g) entre un fuselage et la partie de bord de la porte (3a) dans le sens de la largeur de la porte.
